# EUROPEAN PATENT APPLICATION

(11) **EP 4 575 190 A2**
(43) Date of publication of application: **25.06.2025**
(21) Application number: 24223066.2
(22) Date of filing: 23.12.2024
(51) Int. Cl.: F01D 25/04, F01D 25/24, F01D 25/30

(54) **A FASTENER ASSEMBLY FOR A GAS TURBINE ENGINE CENTER BODY AND METHOD OF ATTACHING A CENTER BODY**

(30) Priority: 22.12.2023 IN 202311088187
(71) Applicant: Rohr, Inc., Chula Vista, CA 91910-2098 (US)
(72) Inventor: PALANISAMY, Jai Ganesh, 641032 Tamilnadu (IN); AZIZ, Peter W., San Diego, 92103 (US)
(74) Representative: Dehns

(57) **Abstract**

A gas turbine engine is provided that includes an annular engine flange (32), an annular center body (34), and a plurality of fastener assemblies (64). The annular engine flange (32) has an engine flange attachment flange (EFAF) (46) that includes a plurality of EFAF apertures (47). Each EFAF aperture (47) has an EFAF aperture inner diameter (D1). The center body assembly (36) has a center body assembly attachment flange (CBAAF) (58). The CBAAF (58) includes a plurality of CBAAF apertures (60), and each CBAAF aperture (60) has an CBAAF aperture inner diameter (D2). Each fastener assembly (64) includes a fastener (66) and first and seconds. The fastener (66) has a collar (82) that has an outer radial surface (92). In assembled form, the collar (82) of each fastener assembly (64) is disposed within a respective CBAAF aperture (60) and is in contact with the engine flange, the first nut (68) fixes the fastener (66) to the engine flange, and the second nut (70) fixes the center body assembly attachment flange (58) to the engine flange.

## Description

### BACKGROUND OF THE INVENTION

### 1. Technical Field

The present disclosure relates to turbine engine exhaust assemblies in general, and to fastener assemblies and method for attaching a center body portion of a turbine engine exhaust assembly in particular.

### 2. Background Information

Gas turbine engine exhaust assemblies, e.g. for commercial airliners, form a nozzle for the high temperature exhaust air of the engine to generate thrust. Exhaust assemblies typically include a center body surrounded by an annular nozzle. The engine exhaust stream exits the engine's turbine stage through an annular passageway. The center body and the annular nozzle form an annular passageway between which conforms to the annular exhaust stream from the engine.

Requirements to improve emissions from aircraft gas turbine engines are continuously increasing. Improvements in noise emissions are particularly desirable and numerous solutions have been proposed. One of those solutions involves the use of acoustically treated air flow surfaces. An example of an acoustically treated airflow surface is an engine exhaust center body. Unfortunately, some acoustic treatments make conventional center body attachment mechanisms difficult to use or totally unusable. What is needed is a center body attachment mechanism that is an improvement over conventional center body attachment mechanisms.

### SUMMARY

According to an aspect of the present invention, a gas turbine engine is provided that includes an annular engine flange, an annular center body, and a plurality of fastener assemblies. The annular engine flange has an engine flange attachment flange (EFAF) that includes a plurality of EFAF apertures. Each EFAF aperture has an EFAF aperture inner diameter. The annular center body has a center body assembly that extends axially between a forward end and an aft end. The center body assembly has a center body assembly attachment flange (CBAAF) disposed at the forward end of the center body assembly. The CBAAF includes a plurality of CBAAF apertures, and each CBAAF aperture has an CBAAF aperture inner diameter. The CBAAF aperture inner diameter is greater than the EFAF aperture inner diameter. Each fastener assembly includes a fastener, a first nut, and a second nut. The fastener has a collar disposed axially between first and second attachment segments. The collar has an outer radial surface disposed at a collar outer diameter that is greater than the EFAF aperture inner diameter and lesser than the CBAAF aperture inner diameter. In assembled form, the collar of each fastener assembly is disposed within a respective CBAAF aperture and is in contact with the engine flange, and the first nut is threadedly engaged with the first attachment segment to fix the fastener to the engine flange, and the second nut is threadedly engaged with the second attachment segment to fix the center body assembly attachment flange to the engine flange.

In an embodiment of the above, each fastener assembly may include a first washer disposed between the first nut and the engine flange, and the first washer (FW) has a FW inner diameter and a FW outer diameter. The FW inner diameter receives the first attachment segment of the respective fastener. The FW outer diameter is greater than the EFAF aperture inner diameter of the respective EFAF aperture.

In an embodiment according to any of the previous embodiments, each fastener assembly may include a second washer disposed between the second nut and the center body assembly attachment flange. The second washer (SW) having an SW inner diameter and a SW outer diameter. The SW inner diameter receives the second attachment segment of the respective fastener. The SW outer diameter is greater than the CBAAF aperture inner diameter of the respective CBAAF aperture.

In an embodiment according to any of the previous embodiments, the collar of each fastener has a collar axial thickness and the center body assembly attachment flange has a CBAAF axial thickness, and the collar axial thickness may be less than the CBAAF axial thickness.

In an embodiment according to any of the previous embodiments, the second attachment segment (SAS) has a SAS outer diameter, and the SAS outer diameter may be less than the collar outer diameter.

In an embodiment according to any of the previous embodiments, the center body assembly may include an interior region and an acoustic element disposed within the interior region.

According to another aspect of the present invention, a fastener assembly for attaching a first flange (FF) to a second flange (SF) is provided. The first flange has a plurality of FF apertures, each having a FF aperture inner diameter. The second flange has a plurality of SF apertures, each having an SF aperture inner diameter. The SF aperture inner diameter is greater than the FF aperture inner diameter. The fastener assembly includes a fastener, a first nut and a second nut. The fastener has a collar disposed axially between first and second attachment segments. The collar has an outer radial surface disposed at a collar outer diameter. The collar outer diameter is greater than the FF aperture inner diameter and lesser than the SF aperture inner diameter. In assembled form, the collar of each fastener is disposed within a respective SF aperture and is in contact with the first flange, and the first nut is threadedly engaged with the first attachment segment to fix the fastener to the first flange, and the second nut is threadedly engaged with the second attachment segment to fix the second flange to the second flange.

In an embodiment of the above, the fastener assembly may include a first washer configured to be disposed between the first nut and the first flange. The first washer (FW) has an FW inner diameter and a FW outer diameter. The FW inner diameter may receive the first attachment segment of the fastener and the FW outer diameter may be greater than the FF aperture inner diameter of the respective FF aperture.

In an embodiment according to any of the previous embodiments, the fastener assembly may include a second washer disposed between the second nut and the second flange. The second washer (SW) has an SW inner diameter and an SW outer diameter. The SW inner diameter may be configured to receive the second attachment segment of the fastener. The SW outer diameter may be greater than the SF aperture inner diameter of the respective SF aperture.

In an embodiment according to any of the previous embodiments, the collar of each fastener has a collar axial thickness and the second flange has a SF axial thickness, and the collar axial thickness may be less than the SF axial thickness.

According to an aspect of the present invention, a method of assembling an annular engine flange to an annular center body assembly is provided. The engine flange (EF) has a plurality of EF apertures, each EF aperture having an EF aperture inner diameter. The center body assembly (CBA) has a plurality of CBA apertures, and each CBA aperture has an CBA aperture inner diameter. The CBA aperture inner diameter is greater than the EF aperture inner diameter. The method includes: providing a plurality of fastener assemblies, wherein each fastener assembly includes a fastener, a first nut, and a second nut, and the fastener has a collar disposed axially between a first attachment segment and a second attachment segment, and the collar has an outer radial surface disposed at a collar outer diameter, and the collar outer diameter is greater than the FF aperture inner diameter and lesser than the SF aperture inner diameter; inserting a first attachment segment of a respective fastener into an EF aperture and fixing the respective fastener to the engine flange using a respective first nut, wherein when the respective fastener is fixed to the engine flange, the first nut holds a lateral side surface of the collar of the respective fastener in contact with the engine flange; mounting a thread protector sleeve over the second attachment segment of each said fastener; coupling the center body to the engine flange by receiving each second attachment segment and mounted said thread protector sleeve within a respective CB aperture, wherein when the center body and the engine flange are coupled, and wherein the collar of each fastener is received within a respective CB aperture; removing the thread protector sleeve from each respective second attachment segment; and fixing the center body to the engine flange using a respective second nut threadedly engaged with a respective second attachment segment.

In an embodiment of the above, the method may include mounting at least one alignment pin (AP) to a respective EF aperture, the alignment pin having an AP axial length, and wherein each thread protector sleeve (TPS) has a TPS axial length, and the AP axial length may be greater than the TPS axial length.

In an embodiment according to any of the previous embodiments, the center body assembly may include an interior region and an acoustic element disposed within the interior region.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic sectional view of a gas turbine engine.
FIG. 2 is a diagrammatic planar view of an engine flange coupled with a center body assembly with a center body aft cone spaced apart.
FIG. 3 is a diagrammatic perspective view of an engine flange spaced apart from a center body assembly from an aft perspective.
FIG. 4 is a diagrammatic perspective view of an engine flange spaced apart from a center body assembly from a forward perspective.
FIG. 5 is a diagrammatic view of an engine flange attachment flange portion disposed in contact with a center body assembly attachment flange portion without a fastener assembly.
FIG. 6 is a diagrammatic view of an engine flange attachment flange portion disposed in contact with a center body assembly attachment flange portion with a present disclosure fastener assembly embodiment.
FIG. 7 is a diagrammatic view of a present disclosure fastener.
FIG. 8 is a diagrammatic view of an engine flange attachment flange portion disposed in contact with a center body assembly attachment flange portion with a present disclosure fastener assembly embodiment including a thread protector sleeve.
FIG. 9 is a diagrammatic view of a thread protector sleeve embodiment.
FIG. 10 is a diagrammatic view of an engine flange attachment flange portion disposed in contact with a center body assembly attachment flange portion with a present disclosure alignment pin.

### DETAILED DESCRIPTION

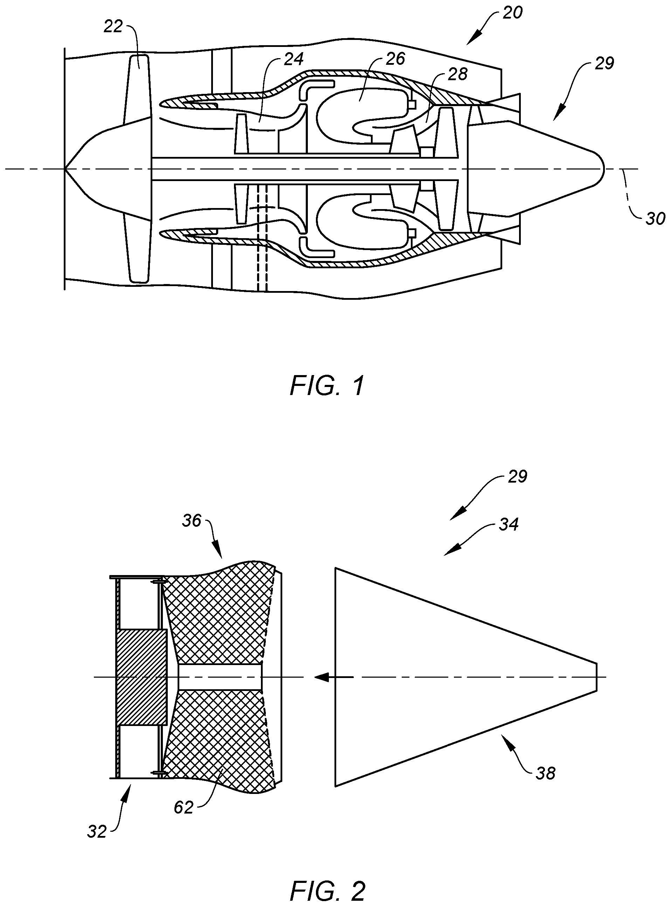

FIG. 1 illustrates a gas turbine engine 20 of a type preferably provided for use in subsonic flight, generally comprising in serial flow communication a fan section 22 through which ambient air is propelled, a compressor section 24 for pressurizing the air, a combustor 26 in which the compressed air is mixed with fuel and ignited for generating an annular stream of hot combustion gases, and a turbine section 28 for extracting energy from the combustion gases. The engine 20 includes an exhaust assembly 29. The gas turbine engine example shown in FIG. 1 is a two-spool turbofan rotational about a rotational axis 30. The present disclosure is not limited to blade testing with any particular gas turbine engine 20 configuration. The terms "forward" and "aft" are used herein to indicate position along the axial centerline 30; referring to the engine 20 shown in FIG. 1, the fan section 22 is disposed forward of the compressor section 24, and the compressor section 24 is disposed aft of the fan section 22. The term "radial" refers to a direction that is perpendicular to the axial centerline 30 and may be used herein to indicate position relative to the axial centerline 30; e.g., a first component positioned "radially inward" of a second component is disposed closer to the axial centerline 30 than the second component, and conversely the second component is disposed "radially outward" of the first component. The term "axial" refers to a direction that is parallel to the axial centerline 30.

FIG. 2 diagrammatically illustrates a portion of an engine exhaust assembly 29 that includes an engine flange 32 and a center body 34. The center body 34 includes a center body assembly 36 disposed forward of a center body aft cone 38. The engine flange 32 is an annular structure that provides support for the center body 34 and may define the inner flow path boundary for exhaust gases exiting the gas turbine engine 20.

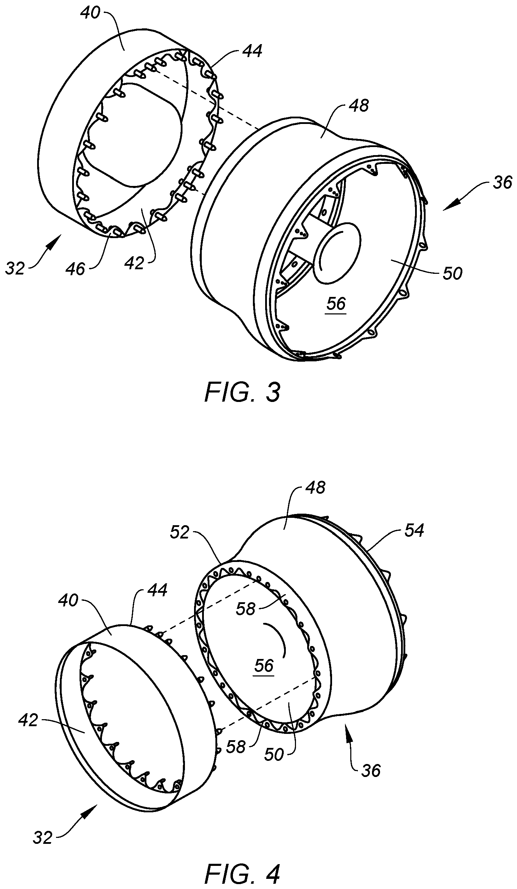

FIGS. 3 and 4 diagrammatically illustrate perspective views of an engine flange 32 embodiment and a center body assembly 36 embodiment centered on a central axis that may coincide with the rotational axis 30 of the engine 20. The engine flange 32 is defined by annular wall having an exterior surface 40, an interior surface 42, and an aft end 44. An attachment flange 46 is disposed at the aft end that extends a distance radially inward for engagement with fasteners as will be described herein. The engine flange attachment flange 46 includes a plurality of apertures 47, each for receiving a fastener. The present disclosure is not limited to any particular engine flange 32 embodiment, including the attachment flange 46 portion, other than one that is configured for use as described herein.

The center body assembly 36 is an annular structure having an exterior surface 48, an interior surface 50, a forward end 52, and an aft end 54. The center body assembly 36 includes an interior region 56 defined by the interior surface 50, extending between the forward and aft ends 52, 54. In the embodiment shown in FIGS. 3 and 4, the diameter of the center body assembly 36 varies; e.g., different diameters at different axial positions between the forward and aft ends 52, 54. The center body assembly 36 includes an attachment flange 58 that is disposed at the forward end and that extends a distance radially inward for engagement with fasteners as will be described herein. The center body assembly attachment flange 58 includes a plurality of apertures 60, each for receiving a fastener.

In some embodiments, the center body assembly 36 may include an acoustic element 62 disposable within the interior region 56 of the center body assembly 36. The acoustic element 62 is configured to decrease and/or alter acoustic emissions associated with the engine exhaust gases exiting the engine exhaust assembly 29. The present disclosure does not require an acoustic element 62 and if one is included, the present disclosure is not limited to any particular acoustic element configuration.

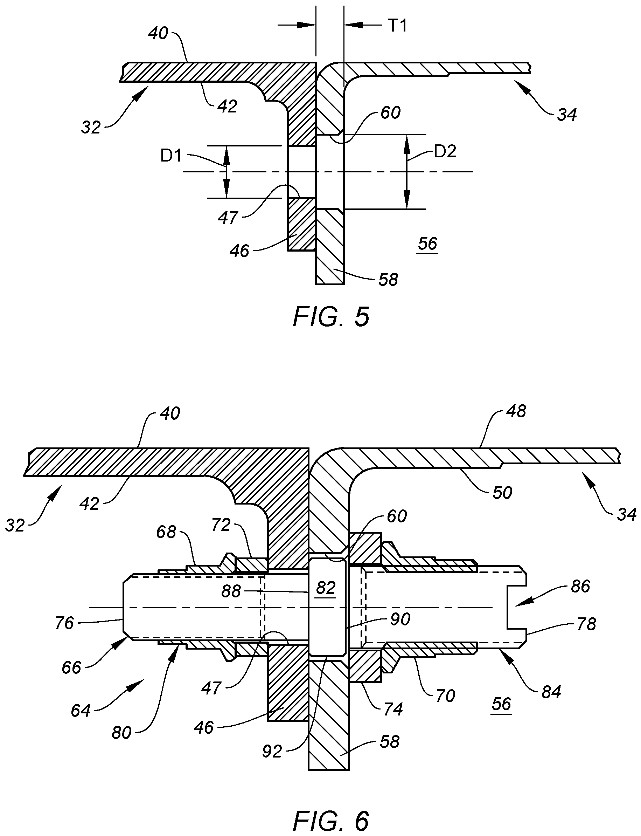

FIG. 5 diagrammatically illustrates the engine flange attachment flange 46 disposed in contact with the center body assembly attachment flange 58 without a fastener assembly 64. As indicated above, the engine flange attachment flange 46 is disposed at the aft end of the engine flange 32 and the center body assembly attachment flange 58 is disposed at the forward end 52 of the center body assembly 36. The aperture 47 disposed within the engine flange attachment flange 46 has a diameter "D1" and the aperture 60 disposed within the center body assembly attachment flange 58 has a diameter "D2", wherein D2 is greater than D1. As a result of the center body assembly flange aperture 60 having a larger diameter than the engine flange attachment flange aperture 47 (D2 > D1), a portion of the engine flange attachment flange 46 is exposed within the center body assembly flange aperture 60. The center body attachment flange 58 has a thickness "T1".

FIG. 6 illustrates the engine flange attachment flange 46 and the center body assembly attachment flange 58 as shown in FIG. 5, now including a fastener assembly 64 securing the two flanges 46, 58 together. The fastener assembly 64 includes a fastener 66, a first nut 68, and a second nut 70. In the embodiment shown in FIG. 6, the fastener assembly 64 includes a first washer 72 and a second washer 74. The present disclosure fastener assembly 64 does not require a first washer 72 or a second washer 74.

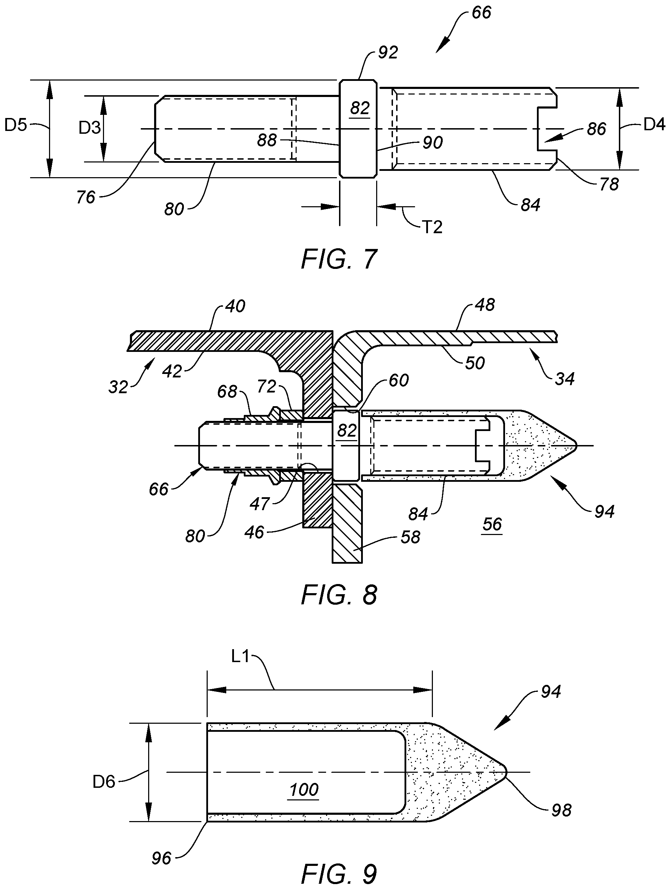

Referring to FIG. 7, a fastener 66 as shown in FIG. 6 is shown separately to facilitate the description herein. The fastener 66 includes a first end 76, a second end 78 opposite the first end 76, a first attachment segment 80, a collar 82, and a second attachment segment 84. The collar 82 is axially disposed between the first and second attachment segments 80, 84.

The first attachment segment 80 extends from the first end 76 to the collar 82 and the second attachment segment 84 extends from the second end 78 to the collar 82. The first attachment segment 80 has an outer diameter "D3" which is less than the inner diameter (D1) of the apertures 47 within the engine flange attachment flange 46. Hence, the first attachment segment 80 may be received within an aperture 47 disposed within the engine flange attachment flange 46.

The second attachment segment 84 has an outer diameter "D4" which is less than the inner diameter (D2) of the apertures 60 within the center body attachment flange 58. Hence, the second attachment segment 84 may be received within an aperture 60 disposed within the center body attachment flange 58. In some embodiments, the second attachment segment 84 may include a tool feature 86 disposed at the second end 78 that is configured to permit a tool to engage with the fastener 66. Non-limiting examples of a tool feature 86 includes a hex-shaped aperture for receiving a hex shaped tool head (e.g., an Allen wrench), or a slot for receiving a rectangular shaped tool head (e.g., a flat head screw driver), or an aperture configured to receive a Phillips head screw driver, or an aperture configured to receive a Torx head driver, or the like.

The collar 82 includes a first lateral side surface 88, a second lateral side surface 90, and an outer radial surface 92. The outer radial surface 92 is disposed at an outer diameter "D5" which is less than the inner diameter (D2) of the apertures 60 within the center body attachment flange 58. In the embodiment shown in FIG. 7, the collar outer diameter (D5) is greater than the second attachment segment outer diameter (D4; i.e., D5 > D4), but the present disclosure does not require a collar outer diameter that is greater than the center body attachment segment outer diameter. At least a portion of the first attachment segment 80 is threaded for engagement with a nut as will be described herein. At least a portion of the second attachment segment 84 is threaded for engagement with a nut as will be described herein. In some embodiments, the collar 82 has an axial thickness ("T2"; see FIG. 7) that is slightly less that the thickness of the center body attachment flange 58 (see FIG. 5; T1 > T2) to produce a clearance amount "C" (see FIG. 6; i.e., T1 - T2 = C). The present disclosure does not require any particular collar thickness.

Referring to FIG. 6, in those embodiments that include a first washer 72, the first washer 72 has an outer diameter and an inner diameter. The first washer outer diameter is greater than the inner diameter of the engine flange attachment flange aperture 47 (D1) and the first washer inner diameter is large enough to receive the first attachment segment 80. In those embodiments that include a second washer 74, the second washer 74 has an outer diameter and an inner diameter. The second washer outer diameter is greater than the inner diameter of the center body assembly attachment flange aperture 60 (D2) and the second washer inner diameter is large enough to receive the second attachment segment 84.

In the embodiment shown in FIG. 6, the first nut 68 includes a flared lip having an outer diameter that is equal to or greater than the outer diameter of the first washer 72, and the second nut 70 includes a flared lip having an outer diameter that is equal to or greater than the outer diameter of the second washer 74. The present disclosure does not require a first and/or second nut 68, 70 having a flared lip. In some embodiments, the first and/or second nut 68, 70 may be configured as a lock nut that resists loosening.

Now referring to FIGS. 8 and 9, each fastener assembly 64 may include a thread protector sleeve 94. The thread protector sleeve 94 includes an exterior surface that extends between a base end 96 and a distal end 98, and an interior cavity 100. The exterior surface includes a cylindrical portion having a diameter "D6" and a tapered portion disposed at the distal end 98. The point at which the exterior surface transitions from a cylindrical configuration diameter D6 to a tapered portion is located a distance "L1" from the base end 96 of the thread protector sleeve 94. The diameter (D6) of the exterior surface of the thread protector sleeve 94 is less than the inner diameter of the center body assembly attachment flange aperture 60 (D2; D2 > D6) to enable the thread protector sleeves 94 to be received within the center body assembly attachment flange apertures 60. The interior cavity 100 is configured to receive the second attachment segment 84. In the embodiment shown in FIG. 8, the interior cavity 100 has a depth that is long enough to receive the entirety of the second attachment segment 84. In some embodiments, the interior cavity 100 may be configured to facilitate retention of the thread protector sleeve 94 when mounted on the second attachment segment 84. For example, an inner diameter of the interior cavity 100 may be configured to have a slight interference fit with the outer diameter of the second attachment segment 84. As another example, the inner diameter of interior cavity 100 may be configured for threaded engagement with the second attachment segment 84. The present disclosure is not limited to any particular mechanism for facilitating retention of the thread protector sleeve 94 on the second attachment segment 84.

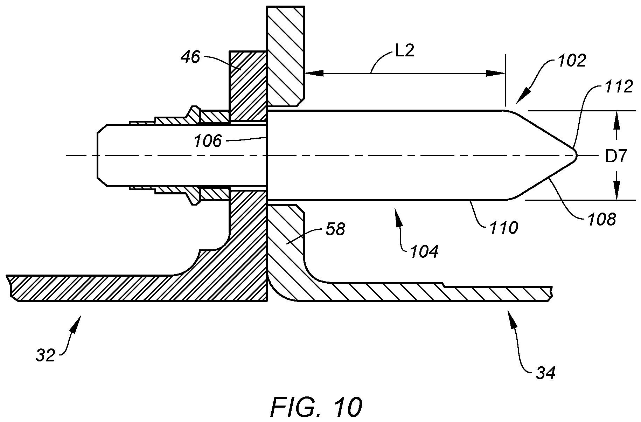

Referring to FIG. 10, in some instances the present disclosure may include use of an alignment pin 102. The alignment pin 102 may include a first attachment segment 80 similar to or the same as that described above with respect to the fastener 66, including use of a first nut 68 and a first washer 72. The alignment pin 102 includes an alignment segment 104 includes a base end 106, a distal end 108, a cylindrical portion 110, and a tapered portion 112. The cylindrical portion 110 extends axially from the base end 106 to the beginning of the tapered portion 112, and the tapered portion 112 extends between the distal end 108 and the cylindrical portion 110. The cylindrical portion 110 has a diameter "D7" that is less than the inner diameter of the center body assembly attachment flange aperture 60 (D2; D2 > D7) to enable the alignment segment 104 to be received within the center body assembly attachment flange apertures 60. The axial length of the cylindrical portion 110 of the alignment segment is such that the cylindrical portion extends a distance "L2" from the surface of the center body attachment flange 58 to the beginning of the tapered portion 112 of alignment segment 104.

Referring to FIGS. 3 and 4, to assemble a present disclosure exhaust assembly 29 using present disclosure fastener assemblies 64, a portion of a present disclosure fastener assembly 64 is attached to each engine flange attachment flange 58. More specifically, the first attachment segment 80 of a fastener 66 is inserted through a respective engine flange attachment flange 58. A first washer 72 is placed over the first attachment segment 80 and a first nut 68 is threadedly engaged with the first attachment segment 80. Once the first nut 68 is tightened, the first lateral side surface 88 of the collar 82 is in contact with the engine flange attachment flange 46 around the periphery of the engine flange attachment flange aperture 47. Once secured, the fastener 66 is fixed against rotation. As can be seen in FIG.3, at least one alignment pin 102 is, but more typically a plurality of alignment pins 102 are, attached to the engine flange attachment flange 46. When more than one alignment pin 102 is used, the alignment pins 102 may be spaced apart from one another (e.g., two pins 102 one hundred and eighty degrees apart, or three pins 102 one hundred and twenty degrees apart, etc.) to facilitate coupling of the engine flange 32 to the center body assembly 36.

In some embodiments, after the fasteners 66 are attached to the engine flange attachment flange 46, a thread protector sleeve 94 is disposed over the second attachment segment 84 of each fastener 66. As indicated above, the cylindrical portion of each thread protector sleeve 94 may extend axially a distance L1 and the alignment pins may extend a distance L2. The axial distance (L2) of the alignment pins is greater than the axial length (L1) of the thread protector sleeves 94. Hence, with the thread protector sleeves 94 mounted on the fasteners 66, the alignment pins remain axially proud of the thread protector sleeves 94.

Subsequent to the fastener assemblies 64 and alignment pins being attached to the engine flange 32, the center body assembly 36 is brought into engagement with the engine flange 32; i.e., the engine flange attachment flange 46 and the center body assembly attachment flange 58 are drawn towards one another. The center body assembly attachment flange apertures 60 are circumferentially arranged in a pattern that mirrors the circumferential positions of the fasteners 66 and the alignment pins 102. Because the alignment pins 102 are axially proud of the thread protector sleeves 94 covering the respective second attachment segments 84, the alignment pins 102 are engaged first. As the center body assembly 36 is drawn closer to the engine flange 32, the alignment pins 102 are received within respective center body assembly apertures 60 to secure alignment between the engine flange attachment flange 46 and the center body assembly attachment flange 58. Subsequently, the thread protector sleeves 94 are received within the respective center body assembly apertures 60. Once the engine flange attachment flange 46 and the center body assembly attachment flange 58 abut one another, the threaded protector sleeves can be removed from the second attachment segment 84 of each respective fastener 66, and a second washer 74 and a second nut 70 can be applied to the respective fastener 66. As indicated above, in some embodiments the collar axial thickness may be slightly less that the center body attachment flange thickness (T1 > T2) to produce a clearance amount (i.e., T1 - T2 = C). The clearance amount helps to ensure the engine flange attachment flange 46 and the center body assembly attachment flange 58 are tightly coupled without mechanical interference from the components clamped together by the fasteners 66.

Access to the fasteners 66 at the center body attachment flange 58 is provided through the interior region 56 of the center body assembly 36. The configuration of the present disclosure fastener assemblies 64 greatly facilitates the attachment process; e.g., by permitting a portion of each fastener assembly 64 to be fixed to the engine flange 32 prior to coupling with the center body assembly 36. In addition, however and perhaps more importantly, the configuration of the present disclosure fastener assemblies 64 greatly facilitates the attachment process in those embodiments wherein the center body assembly 36 includes an acoustic element 62 disposable within the interior region 56 of the center body assembly 36. The acoustic element 62 may possess a variety of different configurations and some of those configurations may impede or block access to the fastener first attachment segments 80. The present disclosure fastener assemblies 64 permit the center body assembly 36 to be attached to the engine flange 32 without access the fastener first attachment segments 80 since those are already fixed to the engine flange 32 prior to the coupling of the center body assembly 36 and the engine flange 32.

Once the center body assembly 36 is coupled to the engine flange 32, the center body aft cone 38 may be attached to the center body assembly 36.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures-such as alternative materials, structures, configurations, methods, devices, and components, and so on-may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A gas turbine engine, comprising:
an annular engine flange (32) having an engine flange attachment flange (EFAF) (46) that includes a plurality of EFAF apertures (47), each EFAF aperture (47) having an EFAF aperture inner diameter (D1);
an annular center body (34) having a center body assembly (36), the center body assembly (36) extending axially between a forward end (52) and an aft end (54), the center body assembly (36) having a center body assembly attachment flange (CBAAF) (58) disposed at the forward end (52) of the center body assembly (36), the CBAAF (58) including a plurality of CBAAF apertures (60), each CBAAF aperture (60) having an CBAAF aperture inner diameter (D2), wherein the CBAAF aperture inner diameter (D2) is greater than the EFAF aperture inner diameter (D1); and
a plurality of fastener assemblies (64), each fastener assembly (64) including:
a fastener (66) having a collar (82) disposed axially between a first attachment segment (80) and a second attachment segment (84), wherein the collar (82) has an outer radial surface (92) disposed at a collar outer diameter (D5), and wherein the collar outer diameter (D5) is greater than the EFAF aperture inner diameter (D1) and lesser than the CBAAF aperture inner diameter (D2);
a first nut (68); and
a second nut (70);
wherein in an assembled form, the collar (82) of each said fastener assembly (64) is disposed within a respective said CBAAF aperture (60) and is in contact with the annular engine flange (32) and the first nut (68) is threadedly engaged with the first attachment segment (80) to fix the fastener (66) to the annular engine flange (32), and the second nut (70) is threadedly engaged with the second attachment segment (84) to fix the center body assembly attachment flange (58) to the annular engine flange (32).

2. The gas turbine engine of claim 1, wherein each said fastener assembly (64) includes a first washer (72) disposed between the first nut (68) and the annular engine flange (32), the first washer (FW) (72) having an FW inner diameter that receives the first attachment segment (80) of the respective fastener (66) and a FW outer diameter that is greater than the EFAF aperture inner diameter (D1) of the respective EFAF aperture (47).

3. The gas turbine engine of claim 1 or 2, wherein each said fastener assembly (64) includes a second washer (74) disposed between the second nut (70) and the center body assembly attachment flange (58), the second washer (SW) (74) having an SW inner diameter that receives the second attachment segment (84) of the respective fastener (66) and a SW outer diameter that is greater than the CBAAF aperture inner diameter (D2) of the respective CBAAF aperture (60).

4. The gas turbine engine of any preceding claim, wherein the collar (82) of each said fastener (66) has a collar axial thickness (T2) and the center body assembly attachment flange (58) has a CBAAF axial thickness (T1), and the collar axial thickness (T2) is less than the CBAAF axial thickness (T1).

5. The gas turbine engine of any preceding claim, wherein the second attachment segment (SAS) (84) has a SAS outer diameter (D4), and the SAS outer diameter (D4) is less than the collar outer diameter (D5).

6. The gas turbine engine of any preceding claim, wherein the center body assembly (36) includes an interior region (56) and an acoustic element (62) is disposed within the interior region (56).

7. A fastener assembly for attaching a first flange (FF) (46) to a second flange (SF) (58), the first flange (46) having a plurality of FF apertures (47) each having a FF aperture inner diameter (D1), and the second flange (58) having a plurality of SF apertures (60) each having an SF aperture inner diameter (D2), wherein the SF aperture inner diameter (D2) is greater than the FF aperture inner diameter (D1), the fastener assembly (64) comprising:
a fastener (66) having a collar (82) disposed axially between a first attachment segment (80) and a second attachment segment (84), wherein the collar (82) has an outer radial surface (92) disposed at a collar outer diameter (D5), and wherein the collar outer diameter (D5) is greater than the FF aperture inner diameter (D1) and lesser than the SF aperture inner diameter (D2);
a first nut (68); and
a second nut (70);
wherein in an assembled form, the collar (82) of each said fastener (66) is disposed within a respective said SF aperture (60) and is in contact with the first flange (46) and the first nut (68) is threadedly engaged with the first attachment segment (80) to fix the fastener (66) to the first flange (46), and the second nut (70) is threadedly engaged with the second attachment segment (84) to fix the second flange (58) to the second flange (58).

8. The fastener assembly of claim 7, further comprising:
a first washer (72) configured to be disposed between the first nut (68) and the first flange (46), the first washer (FW) (72) having an FW inner diameter that receives the first attachment segment (80) of the fastener (66) and a FW outer diameter that is greater than the FF aperture inner diameter (D1) of the respective FF aperture (47), and/or
a second washer (74) disposed between the second nut (70) and the second flange (58), the second washer (SW) (74) having an SW inner diameter that is configured to receive the second attachment segment (84) of the fastener (66) and a SW outer diameter that is greater than the SF aperture inner diameter (D2) of the respective SF aperture (60).

9. The fastener assembly of claim 7 or 8, wherein:
the collar (82) of each said fastener (66) has a collar axial thickness (T2) and the second flange (58) has a SF axial thickness (T1), and the collar axial thickness (T2) is less than the SF axial thickness (T1); and/or
the second attachment segment (SAS) (84) has a SAS outer diameter (D4), and the SAS outer diameter (D4) is less than the collar outer diameter (D5).

10. A method of assembling an annular engine flange (32) to an annular center body assembly (36), the annular engine flange (EF) (32) having a plurality of EF apertures (47), each EF aperture (47) having an EF aperture inner diameter (D1), the center body assembly (CBA) (36) having a plurality of CBA apertures (60), each CBA aperture (60) having an CBA aperture inner diameter (D2), wherein the CBA aperture inner diameter (D2) is greater than the EF aperture inner diameter (D1), the method comprising:
providing a plurality of fastener assemblies (64), each said fastener assembly (64) including:
a fastener (66) having a collar (82) disposed axially between a first attachment segment (80) and a second attachment segment (84), wherein the collar (82) has an outer radial surface (92) disposed at a collar outer diameter (D5), and wherein the collar outer diameter (D5) is greater than the FF aperture inner diameter (D1) and lesser than the SF aperture inner diameter (D2);
a first nut (68); and
a second nut (70);
inserting a first attachment segment (80) of a respective fastener (66) into an EF aperture (47) and fixing the respective fastener (66) to the annular engine flange (32) using a respective said first nut (68), wherein when the respective said fastener (66) is fixed to the annular engine flange (32), the first nut (68) holds a lateral side surface (88, 90) of the collar (82) of the respective fastener (66) in contact with the annular engine flange (32);
mounting a thread protector sleeve (94) over the second attachment segment (84) of each said fastener (66);
coupling the center body (34) to the annular engine flange (32) by receiving each said second attachment segment (84) and mounting said thread protector sleeve (94) within a respective said CBA aperture (60), wherein when said center body (34) and said annular engine flange (32) are coupled, the collar (82) of each said fastener (66) is received within a respective said CBA aperture (60);
removing the thread protector sleeve (94) from each respective said second attachment segment (84); and
fixing the center body (34) to the annular engine flange (32) using a respective said second nut (70) threadedly engaged with a respective said second attachment segment (84).

11. The method of claim 10, further comprising mounting at least one alignment pin (AP) (102) to a respective said EF aperture (47), the alignment pin (102) having an AP axial length (L2); and
wherein each thread protector sleeve (TPS) (94) has a TPS axial length (L1), and the AP axial length (L2) is greater than the TPS axial length (L1).

12. The method of claim 10 or 11, wherein each said fastener assembly (64) includes a first washer (72) disposed between the first nut (68) and the annular engine flange (32), the first washer (FW) (72) having an FW inner diameter that receives the first attachment segment (80) of the respective fastener (66) and a FW outer diameter that is greater than the EF aperture inner diameter (D1) of the respective EF aperture (47).

13. The method of any of claims 10 to 12, wherein each said fastener assembly (64) includes a second washer (74) disposed between the second nut (70) and the center body assembly (36), the second washer (SW) (74) having an SW inner diameter that receives the second attachment segment (84) of the respective fastener (66) and a SW outer diameter that is greater than the CBA aperture inner diameter (D2) of the respective CBA aperture (60).

14. The method of any of claims 10 to 13, wherein the collar (82) of each said fastener (66) has a collar axial thickness (T2) and the center body assembly (36) has a CBA axial thickness (T1), and the collar axial thickness (T2) is less than the CBA axial thickness (T1).

15. The method of any of claims 10 to 14, wherein the center body assembly (36) includes an interior region (56) and an acoustic element (62) disposed within the interior region (56).
